# EUROPÄISCHE PATENTSCHRIFT

(11) **EP 0 739 328 B1**
(45) Veröffentlichungstag und Bekanntmachung des Hinweises auf die Patenterteilung: **03.12.1997**
(21) Anmeldenummer: 95905051.9
(22) Anmeldetag: 12.01.1995
(51) Int. Cl.: C05F 17/02

(54) **VERFAHREN UND ANORDNUNG ZUR UMSETZUNG VON ROTTEMATERIALIEN**
PROCESS AND DEVICE FOR SHIFTING ROTTING MATERIALS
PROCEDE ET SYSTEME PERMETTANT DE DEPLACER DES MATERIAUX EN PUTREFACTION

(30) Priorität: 14.01.1994 DE 4401360
(43) Veröffentlichungstag der Anmeldung: 30.10.1996
(73) Patentinhaber: Sutco Maschinenbau GmbH & Co. KG, 51469 Bergisch Gladbach (DE)
(72) Erfinder: MEIER-STOLLE, Gereon, D-41747 Viersen (DE)
(74) Vertreter: Stachow, E.-W., Prof. Dr.
(86) Internationale Anmeldenummer: DE9500037
(87) Internationale Veröffentlichungsnummer: WO9519330

(56) Entgegenhaltungen:
- EP-A- 0 060 410
- EP-A- 0 423 514
- AU-A- 386 821

## Beschreibung

Die Erfindung betrifft ein Verfahren zur Umsetzung von Rottematerialien, die in einer Kompostiermiete gelagert sind und bei dem das Rottegut an einer Position, an der der Rottevorgang bereits eine Zeit lang stattgefunden hat, aufgenommen und an einer anderen Position abgesetzt und durch Schüttung verteilt wird, indem der Abwurfpunkt des Rottegutes über die Abwurffläche geführt wird, wo während der darauffolgenden Zeit der Rottevorgang stattfinden soll.

Die Erfindung betrifft weiterhin eine Vorrichtung zur Durchführung des Verfahrens mit einer in Längsrichtung der Grundfläche der Kompostiermiete bewegbaren Brücke, an der ein Mittel zur Förderung von Rottematerial in Querrichtung der Kompostiermiete angeordnet ist, und mit Mitteln zur Förderung des Rottemateriales in Längsrichtung der Kompostiermiete.

Kompostierbare Abfallmaterialien werden in zunehmendem Maße industriell derart aufbereitet, daß sie zerkleinert in Kompostiermieten eingebracht werden um darin zu verrotten, wodurch wiederverwertbarer Humus entsteht. Der dabei stattfindende biologische Prozeß erfordert für einen optimalen Ablauf in Zeitabständen eine Auflockerung und Durchmischung des Rottegutes.

Es ist dazu bekannt, das Rottegut umzusetzen, das heißt, an einer Stelle, an der der Rottevorgang bereits eine Zeit lang stattgefunden hat, aufzunehmen und an einer anderen Stelle abzusetzen, wo während der darauffolgenden Zeit der Rottevorgang stattfinden soll.

Zur Durchführung dieses Vorganges finden einerseits sogenannte Trogförderer Verwendung. Dabei sind Schaufeln oder Tröge an einer umlaufenden Endloskette angeordnet, die das Rottematerial aufnehmen, transportieren und wieder absetzen. Diese Trogförderer werden dabei bewegt, um damit die gesamte Miete durchfahren zu können. Diese Bewegung kann beispielsweise durch den Einsatz von Trogförderern an mobilen Fahrzeugen erfolgen.

Nachteilig ist bei diesen Trogföderern, daß keine oder nur eine unzureichende Zerkleinerung des Rottemateriales erfolgt und Stücke des Rottemateriales wieder unzerkleinert abgesetzt werden. Die Gewichtskraft der Stücke verursacht sodann auch noch eine zusätzliche Verdichtung des abgesetzten Materials. Durch eine derartige Verdichtung wird der Luftdurchsatz durch das Rottegut erschwert und der Kompostiervorgang behindert. Außerdem ist es nicht möglich, das Rottegut hinreichend genau und gleichmäßig zu befeuchten.

Weiterhin ist zum Umsetzen des Rottegutes ein Kratzförderer bekannt. Dieser Kratzförderer ist auf einer Brücke angeordnet und über Scherengelenke höhenverstellbar. Er wird beim Aufnehmen von oben auf das Material aufgesetzt. Er kratzt dann mittels eines Kratzbandes, das auf seiner Unterseite Mitnehmernasen aufweist, die ihrerseits die Kratzfunktion realisieren, das Material von der Oberseite her auf ein Förderband. Dieses Förderband übernimmt den Transport des Materials bis zur Absetzposition. Dort wird das abzusetzende Material abgeworfen und mit einem weiteren Kratzförderer breitgezogen.

Durch die Höhenverstellung des Kratzförderers wird sichergestellt, daß das Material bis zum Grund der Miete aufgenommen werden kann und auch beim Absetzen geringe Absetzhöhen verwirklicht werden können.

Eine derartige Anlage zum Kompostieren von Rottegut geht aus der EP 0 423 514 A3 hervor.

Nachteilig ist hierbei, daß durch die Kratzbewegung keine Zerkleinerung des Rottegutes erreicht wird, daß die Durchmischung unzureichend ist und daß bei dem Absetzvorgang eine Materialverdichtung eintritt. Außerdem muß stets über die gesamte Breite der Miete gearbeitet werden. Zur Auflockerung und zur Durchmischung des Rottegutes sind zusätzliche Mittel erforderlich. Diese bestehen in einer Schnecke mit einer vertikalen Drehachse, die durch das Rottegut unter Drehbewegung geführt wird, wobei partiell eine Förderung des unten liegenden Rottegutes nach oben erreicht wird.

Eine derartige Mischschnecke erhöht den Aufwand bei einer Rotteanlage erheblich, zumal die Schnecke aufgrund ihrer Führung und ihres Antriebes, der nur auf der Oberseite möglich ist, dazu neigt, häufig abzubrechen.

Der Aufwand einer derartigen Anlage ist weiterhin dadurch hoch, daß für jeden Kratzförderer ein Zuführ- und ein Austragband benötigt wird.

Eine Befeuchtung des Rottegutes erfolgt bei der Materialzuführung zu dem austragenden Kratzförderer, indem über die Länge des Zuführbandes Wasser auf das transportierte Material gespritzt wird. Dabei wird jedoch nicht nur das Material sondern auch das Zuführband ständig befeuchtet. Die Folge davon sind erhöhte Verschleißerscheinungen und ein häufiges Verkrusten oder Verkleben des Zuführbandes.

Die Aufgabe der Erfindung besteht darin, unter Verringerung des Aufwandes eine Zerkleinerung und eine gute Durchmischung des Rottemateriales zu erreichen und eine Verdichtung des Materials beim Absetzen zu vermeiden.

Gemäß der Erfindung wird die Aufgabe durch ein Verfahren zur Umsetzung von Rottematerialien der eingangs genannten Art dadurch gelöst, daß die Aufnahme des Rottegutes aus einer Kompostiermiete unter gleichzeitiger Zerkleinerung schichtweise von oben nach unten erfolgt und daß der Abwurfpunkt höhenvariabel ist, wobei eine maximal vorgegebene Fallhöhe eingehalten wird.

Durch dieses Verfahren wird erreicht, daß zerkleinertes und damit schüttbares Material locker in die Kompostiermiete eingebracht wird. Da durch die Schüttung und die Bewegung des Abwurfpunktes über die Fläche eine sehr gute Flächenverteilung und eine gute Durchmischung erzielt wird, erübrigt sich ein zusätzliches Verteilen des Rottemateriales, was die Gefahr des Verfestigens mit sich bringen würde.

Die Möglichkeit, den Abwurfpunkt in der Höhe zu variieren vermeidet, daß sich das Material beim Einbringen selbst verfestigt, denn damit wird eine maximale Fallhöhe nicht überschritten. Die maximale Fallhöhe bestimmt sich dabei aus der Höhe, die eingehalten werden muß um nicht eine Eigenverdichtung des Materials zu bewirken.

Eine besonders günstige Variante des erfindungsgemäßen Verfahrens sieht vor, daß die maximale Fallhöhe 1 m bis 1,50 m beträgt.

In einer weiteren Ausgestaltung des erfindungsgemäßen Verfahrens wird die Verteilung des Rottemateriales mehrschichtig vorgenommen.

Bei einer mehrschichtigen Verteilung wird das Material, welches von einer Position ausgetragen wurde, über eine breite Fläche verteilt. Dabei wird beim Austragen die Voraussetzung einer guten Durchmischung geschaffen.

Eine besonders günstige Form des Verfahrens ist dadurch gekennzeichnet, daß auf das Material in der Nähe des Abwurfpunktes Wasser in feinverteilter Form aufgebracht wird.

Durch den Rottevorgang, der als energieextensiver Vorgang abläuft, wird das Rottematerial getrocknet. Da für den biologischen Prozeß jedoch eine Grundfeuchtigkeit notwendig ist, ist es erforderlich, den Wasserverlust von Zeit zu Zeit auszugleichen. Die Einbringung des dafür erforderlichen Wassers in feinverteilter Form ist dabei sehr günstig, da eine Durchnässung des Rottegutes vermieden und eine sehr gleichmäßige Verteilung erreicht wird.

Eine Möglichkeit des Verfahrens sieht hierzu vor, daß die Feuchtigkeit in dem Rottegut gemessen und die Wasserzugabemenge in Abhängigkeit von dem Meßergebnis gesteuert wird. Damit wird es möglich, den Rotteprozeß optimal zu gestalten.

In einer weiteren Ausgestaltung des erfindungsgemäßen Verfahrens ist vorgesehen, daß der Absetzpunkt in Längs- und Querrichtung der Kompostiermiete bewegbar ist.

Eine derartige Bewegung ermöglicht das Anfahren jedes Punktes der Absetzfläche in der Kompostiermiete. Zum Zwecke des gleichmäßigen Absetzens des Rottegutes kann eine Vorzugsbewegungsrichtung gewählt werden.

Eine Möglichkeit ist zum Beispiel darin zu sehen, daß die Vorzugrichtung die Querrichtung ist. Dabei wird in Querrichtung abgesetzt, bei Erreichen einer seitlichen Endposition in Längsrichtung verschoben und weiter in entgegengesetzter Querrichtung abgesetzt. In analoger Weise kann auch verfahren werden, wenn die Längsrichtung als Vorzugsrichtung gewählt wird.

Die Aufgabe der Erfindung wird weiterhin bei einer Vorrichtung zur Umsetzung von Rottegut von einer Kompostiermiete zu einer in Längserstreckung benachbarten Kompstiermiete mit jeweils einer über jeder Kompostiermiete in Längsrichtung bewegbaren Brücke, an der ein Mittel zur Förderung von Rottegut in Querrichtung der Kompostiermiete angeordnet ist und mit Mitteln zur Förderung des Rottegutes in Längsrichtung der Kompostiermieten in Form von Längsförderbändern, die an ihren Enden über Umsetzförderbänder ringförmig miteinander verbindbar sind, dadurch gelöst, daß jede Brücke ein reversierbares Brückenförderband aufweist, dem zwischen den Brücken jeweils ein Längsförderband zugeordnet ist, wobei beide Längsförderbänder gegenläufig angetrieben sind. An jeder Brücke ist eine in Brückenlängsrichtung bewegbare Katze vorgesehen, an der eine Aufnahme- und Absetzeinheit mit einem reversierbaren und höhenverstellbaren Förderband und eine Fräswalze angeordnet ist, die mit Hilfe einer Traverse vor den vorderen Umlenkpunkt des Förderbandes schwenkbar ist.

Die Brücke ist in der Längsrichtung der Kompostiermiete bewegbar. Quer zu dieser Bewegungsrichtung ist die Katze verfahr bar, wodurch jeder Punkt der Absetzfläche in der Kompostiermiete erreichbar wird.

Dadurch, daß die Aufnahme- und Absetzeinheit mit einem reversierbaren Förderband versehen ist, wird sowohl eine Aufnahme des Rottemateriales als auch ein Absetzen ermöglicht. Dabei bewegt sich die Transportrichtung beim Absetzen in Richtung zur Kompostiermiete und bei der Aufnahme in Richtung zu dem Brückenförderband.

Die Höhenverstellung des Förderbandes dient einerseits der Einstellung der Höhe des Absetzpunktes und andererseits der Verstellung der Betriebsart. Während das Transportband beim Absetzen unter dem Brückenförderband liegt und der eingeschwenkte Abstreifer das Rottematerial von dem Brückenförderband auf das Transportband wirft, liegt der Abwurfpunkt des Förderbandes beim Austragen über dem Brückenförderband. Damit wird es möglich, das aus der Kompostiermiete aufgenommene Rottematerial auf das Brückenförderband zu werfen, von dem es abtransportiert wird.

Ebenfalls der Verstellung der Betriebsart dient die längenvarrierbare und schwenkbare Traverse. So wird die Fräswalze beim Aufnehmen vor den vorderen Umlenkpunkt des Transportbandes geschwenkt. In dieser Stellung kann die rotierende Fräswalze das Rottematerial zerkleinern und auf das Transportband werfen.

Bei der Absetzfunktion wird die Fräswalze in eine Ruhestellung geschwenkt, die über dem Transportband liegt.

In einer besonders günstigen Ausgestaltung der erfindungsgemäßen Vorrichtung ist vorgesehen, daß in ein parallel zum Brückenfahrweg förderndes Längsförderband ein an der Brücke befestigter Schleifenwagen eingreift, dessen Abwurfpunkt über dem Brückenförderband liegt, wobei der Abwurfpunkt des Brückenförderbandes über dem Längsförderband hinter der Bandschleife liegt.

Dieser Schleifenwagen bewirkt eine ständige Ankopplung des Brückenförderbandes an des Längsförderband. Damit wird es möglich, daß das Längsförderband sowohl dem Aufnehmen als auch dem Absetzen dient, obwohl es nur in einer Richtung bewegbar ist. Somit kann ein zweites Förderband eingespart werden.

In einer besonders günstigen Ausgestaltung der Erfindung ist eine zweite Anordnung, bestehend aus einer Brücke, einer Katze und einer Aufnahme- und Absetzeinheit, vorgesehen, die über die Längsförderstrecke mit der ersten Anordnung verbunden ist.

Eine zweite Anordnung bietet die Möglichkeit, daß ein wechselweises Arbeiten und damit eine weitgehende Automatisierung möglich ist. Dabei ist es unerheblich, ob die beiden Anordnungen nebeneinander, wie etwa in einer zweigeteilten Kompostiermiete oder hintereinander liegen, wie dies in einer einteiligen Kompostiermiete der Fall sein kann.

Die Bedingung, die darin besteht, daß beide Anordnungen über die Längsförderstrecke miteinander verbunden sind, gewährleistet, daß beide Vorrichtungen wechselweise in beiden Arbeitsweisen arbeiten können. Wird von einer Anordnung das Material aufgenommen, setzt es die andere Anordnung wieder ab. Der Materialtransport zwischen beiden Anordnungen erfolgt über das Längsförderband.

Grundsätzlich ist es erforderlich, daß die Längsförderstrecke zu einem Ring schließbar ist, das heißt, daß der Ausgang des Längsförderbandes wieder auf seinen Eingang zurückgeführt wird. Bei hintereinanderliegenden Anordnungen kann dies mit einem Rückführband erfolgen. Bei nebeneinanderliegenden Anordnung ist ohnehin je Anordnung ein Längsförderband erforderlich. Dabei werden beide Längsförderbänder an ihren Endseiten miteinander verbunden.

Bei einem Materialeintrag von außen oder einem Materialaustrag nach draußen kann diese Ringschaltung aufgehoben werden.

Die Erfindung soll nachfolgend anhand eines Ausführungsbeispieles näher erläutert werden. In den zugehörigen Zeichnungen zeigt
- Fig. 1: eine Draufsicht auf zwei nebeneinander angeordneten Kompostiermieten mit der erfindungsgemäßen Vorrichtung als Prinzipdarstellung eines erfindungsgemäßen Umsetzvorganges in den Phasen a bis d,

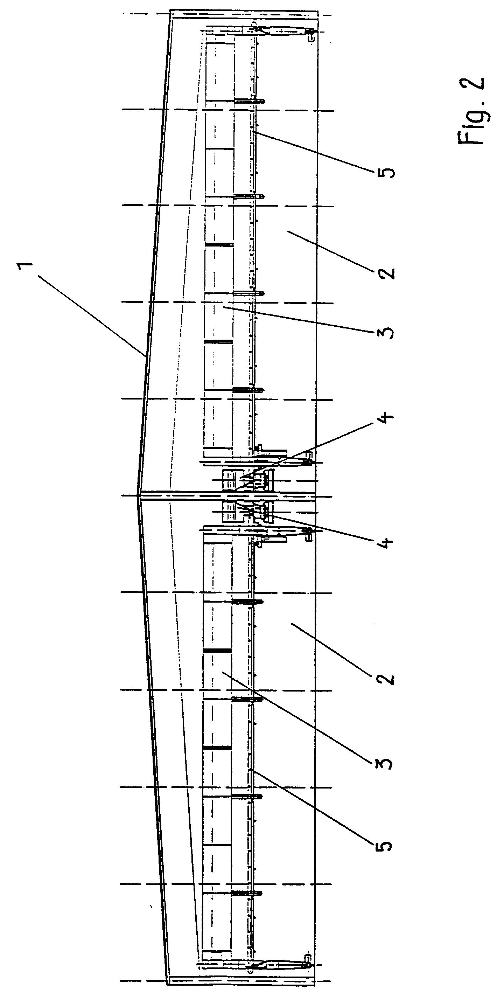

- Fig. 2: den Querschnitt einer Kompostierhalle mit zwei nebeneinander angeordneten erfindungsgemäßen Anordnungen,

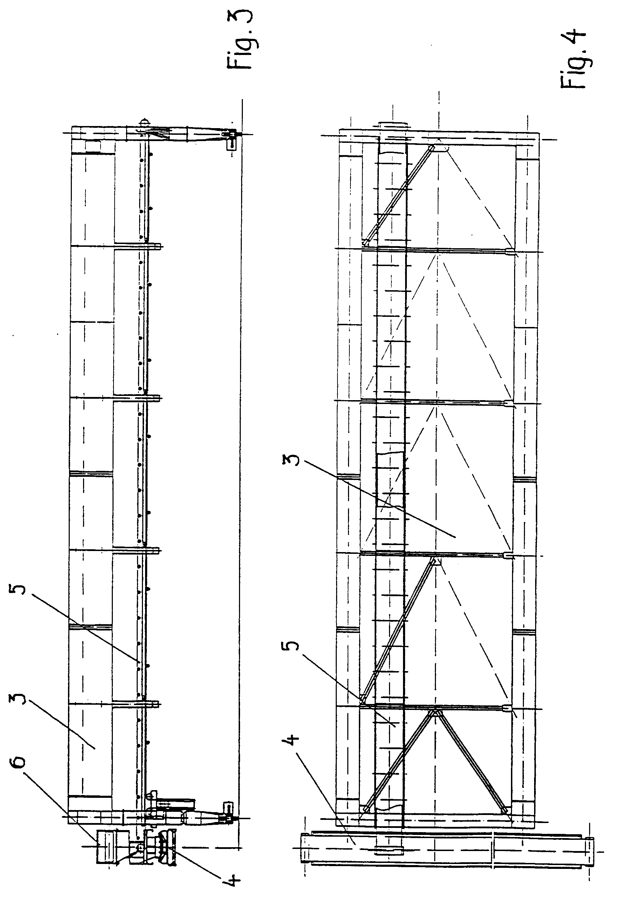

- Fig. 3: eine Vorderansicht einer Brücke mit einem Brückenförderband und einem seitlich angeordneten Schleifenwagen,
- Fig. 4: eine Draufsicht auf die Brücke nach Fig. 3,
- Fig. 5: eine Seitenansicht eines Schleifenwagens,
- Fig. 6: eine Vorderansicht des Schleifenwagens aus der Längsrichtung des Längsförderbandes,
- Fig. 7: eine Seitenansicht einer Aufnahme- und Absetzeinheit bei der Aufnahme einer oberen Schicht des Rottemateriales,
- Fig. 8: eine Seitenansicht einer Aufnahme- und Absetzeinheit bei der Aufnahme von Rottematerial vom Boden der Kompostiermiete,
- Fig. 9: eine Seitenansicht einer Aufnahme- und Absetzeinheit bei dem Absetzen einer tiefliegenden Schicht des Rottemateriales und
- Fig. 10: eine Seitenansicht einer Aufnahme- und Absetzeinheit bei dem Absetzen einer oberen Schicht des Rottemateriales.

In einer Kompostierhalle 1 sind zwei Kompostiermieten 2 angeordnet. Diese Kompostiermieten 2 liegen in ihrer Längserstreckung nebeneinander.

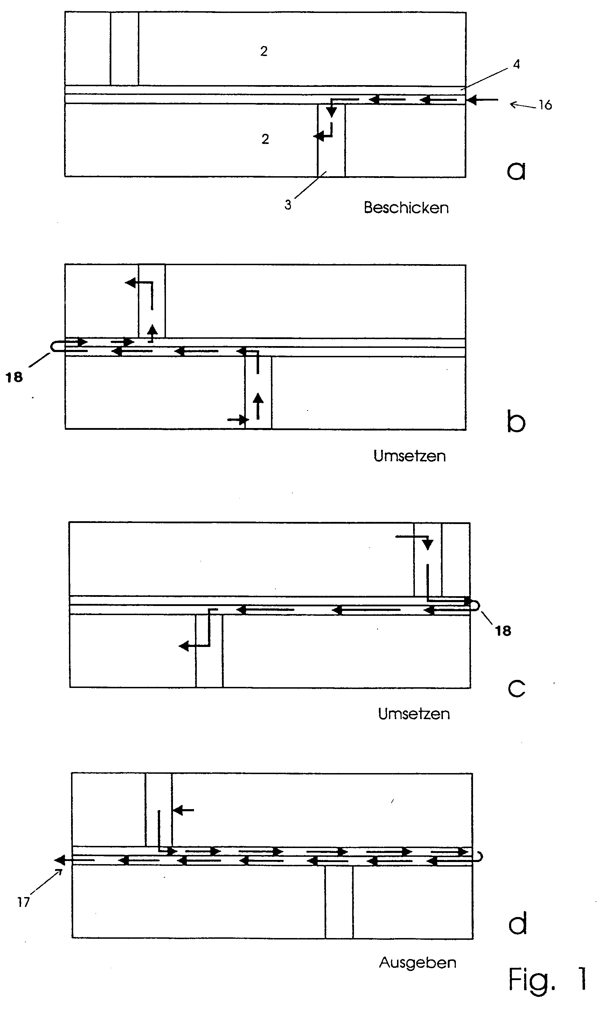

Über jeder Kompostiermiete 2 ist eine Brücke 3 in Längsrichtung verfahrbar angeordnet. Neben jeder Brücke 3 verläuft in Längsrichtung der Kompostiermieten 2 je ein Längsförderband 4. Die Laufrichtungen beider Längsförderbänder 4 sind zueinander gegenläufig und sie sind festgelegt, d.h. nicht reversierbar. An ihren Enden weisen sie, wie in Figur 1 nur schematisch dargestellt, Umsetzförderbänder 18 zur Übergabe von Rottematerial von einem auf das andere Längsförderband 4 auf. Damit sind die beiden Längsförderbänder 4 ringförmig miteinander verbindbar.

Im Falle des Materialeintrages auf der einen und Materialaustrages auf der anderen Seite werden diese Umsetzförderbänder weggeschwenkt.

Jede Brücke 3 weist ein Brückenförderband 5 auf. Dieses Brückenförderband 5 ist reversierbar, d.h. seine Transportrichtung ist je nach Betriebsart umschaltbar. Mit dem Längsförderband 4 verbunden ist das Brückenförderband 5 über einen Schleifenwagen 6.

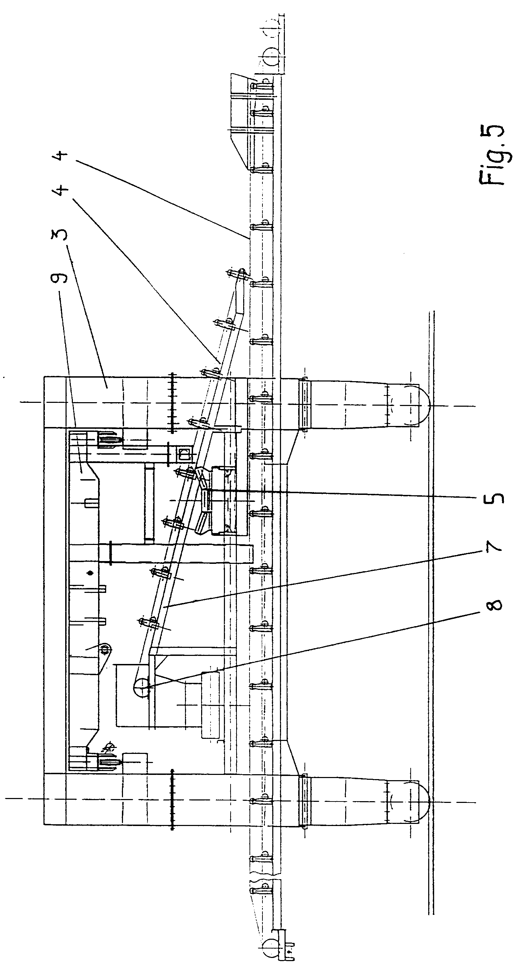

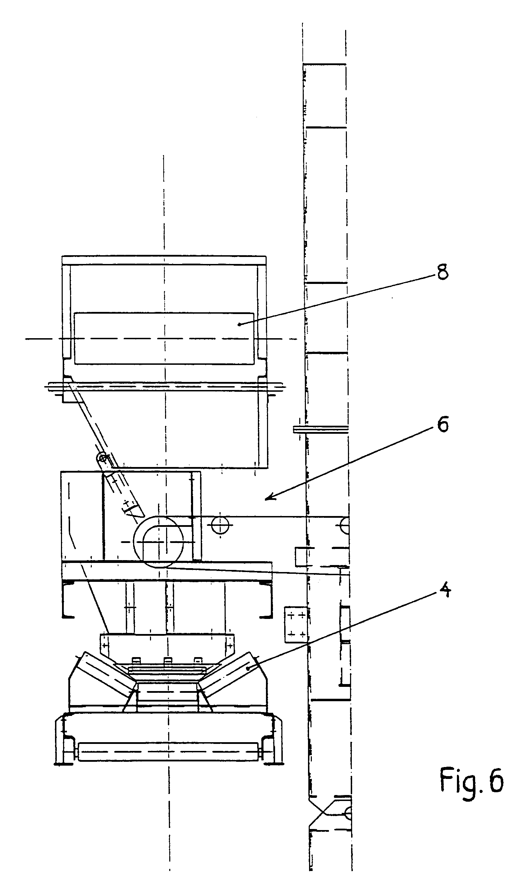

Der Schleifenwagen 6 ist, wie in Fig. 5 und 6 dargestellt, mit der Brücke 3 verbunden. Der Schleifenwagen 6 stellt eine Wirkungsverbindung zwischen dem Längsförderband 4 und dem Brückenförderband 5 her, in dem das Längsförderband 4 in dem Schleifenwagen 6 in Form einer Schleife 7 zu einem oberen Abwurfpunkt 8 und von dort zurück auf die ursprüngliche Transportbahn geführt wird.

Der Abwurfpunkt 8 in dem Schleifenwagen 6 liegt über dem Brückenförderband 5 und der Abwurfpunkt des Brückenförderbandes 5 unter der Schleife 7 jedoch über dem Längsförderband 4 und in Förderrichtung des Längsförderbandes 4 hinter der Schleife 7.

Damit wird erreicht, daß Rottematerial, welches auf dem Längsförderband vor dem Schleifenwagen 6 ankommt, auf das Brückenförderband fällt. Dies ist beim Austragen von Rottematerial durch die Brücke 3 der Fall. Beim Aufnehmen von Rottematerial durch die Brücke 3 kann Rottematerial von dem Brückenförderband 5 auf Längsförderband 4 gebracht werden.

An der Brücke 3 ist in Längsrichtung der Brücke 3, d.h. quer zur Längserstreckung der Kompostiermiete 2 eine Katze 9 bewegbar angeordnet. Diese Katze 9 hat die Aufgabe, eine Aufnahme- und Absetzeinheit 10 zu tragen und zu bewegen.

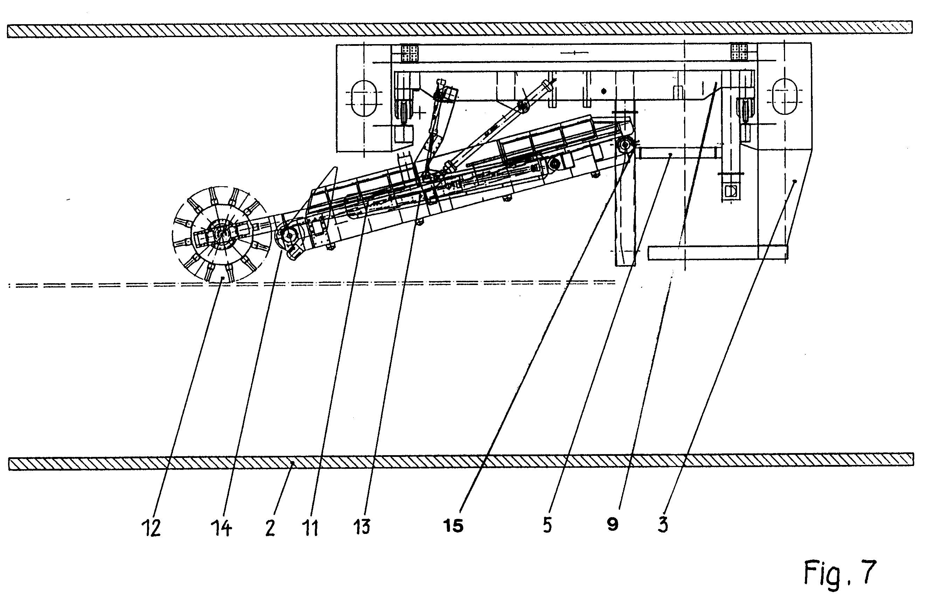

Die Aufnahme- und Absetzeinheit 10, wie in den Figuren 7 bis 10 dargestellt, besteht im wesentlichen aus einem Förderband 11 und einer Fräswalze 12. Das Förderband 11 ist in seiner Höhe verschiebbar an der Katze 9 angeordnet. Damit kann es beim Absetzen von Rottematerial in der Kompostiermiete 2 nach unten gefahren werden, so daß seine Oberseite unter dem Brückenförderband 5 liegt. Die Transportrichtung des Förderbandes 11 ist dabei in Richtung zur Kompostiermiete 2 hin gerichtet. Dabei wird ein schematisch dargestellter Abstreifer 19, der an der Katze 9 angelenkt ist, auf das Brückenförderband 5 geschwenkt. Das auf dem Brückenförderband 5 ankommende Rottematerial wird durch den Abstreifer 19 auf das Förderband 11 der Aufnahme- und Absetzeinheit 10 gelenkt.

Beim Aufnehmen von Rottematerial aus der Kompostiermiete wird das Förderband 11, dessen Laufrichtung dann von der Kompostiermiete 2 weg gerichtet ist, in der Höhe so verstellt, daß sein oberer Umlenkpunkt 15 über dem Brückenförderband 5 liegt. Dadurch kann das auf dem Förderband 11 transportierte Rottematerial auf das Brückenförderband 5 geworfen und von diesem abtransportiert werden.

Die Fräswalze 12 ist über eine Traverse 13 vor den vorderen Umlenkpunkt 14 des Förderbandes 11 schwenkbar. Dazu ist die Welle der Fräswalze 12 auf der einen Seite mit der Traverse 13 verbunden. Auf der anderen Seite ist die Traverse 13 an der Katze 9 angelenkt.

Die Traverse 13 ist außerdem in ihrer Länge variierbar. Damit kann erreicht werden, daß die Fräswalze 12 nicht nur vor das Förderband 11 geschwenkt werden kann sondern daß auch seine Stellung zum Förderband 11 eingestellt werden kann. Damit wird es ermöglicht, daß beim Aufnehmen von Rottematerial verschiedene Schichten angefahren werden können.

Die Funktion der erfindungsgemäßen Vorrichtung ist darin zu sehen, daß zu einem Zeitpunkt Material in die Kompostiermieten 2 eingebracht wird. Dabei ist die Umsetzung von einem Längsförderband 4 auf das andere an der Beschickungsseite 16 der Vorrichtung unterbrochen. Es besteht jedoch in besonderen Fällen auch die Möglichkeit, die Umsetzung auch bei der Beschickung aufrechtzuerhalten. Dann kann gleich bei der Beschickung das neue Material mit Rottematerial vermischt werden. Dies kann sich auf den Ablauf des Rottevorganges positiv auswirken, da damit das neue Material mit Mikroorganismen des Rottemateriales geimpft wird.

Das Material gelangt bei der Beschickung auf das Längsförderband 4 und von dort über den Schleifenwagen 6 in der dargestellten Art und Weise auf das Brückenförderband 5. Von dort lenkt der Abstreifer das Material auf das Förderband 11 der Aufnahme- und Absetzeinheit 10.

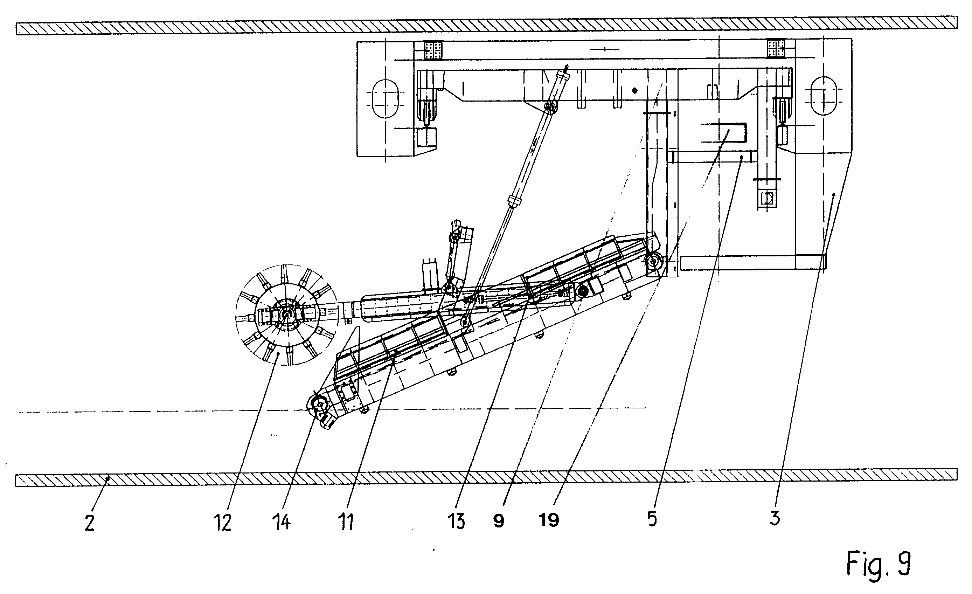

Dabei befindet sich die Aufnahme- und Absetzeinheit 10 in der in Figur 9 dargestellten Position. Es wurde ermittelt, daß die maximale Fallhöhe des Materials 1 m nicht überschreiten darf, wenn eine Eigenverdichtung vermieden werden soll. Aus diesem Grunde liegt der vordere Umlenkpunkt 14 in seiner untersten Stellung 1 m über dem Boden der Kompostiermiete 2.

Beim Absetzen des Materials fährt die Katze 9 in Querrichtung bis zum Erreichen einer der äußeren Positionen. Dann erfolgt eine Längsverschiebung der Brücke 3, wonach die Katze 9 wieder in der anderen Richtung quer fährt.

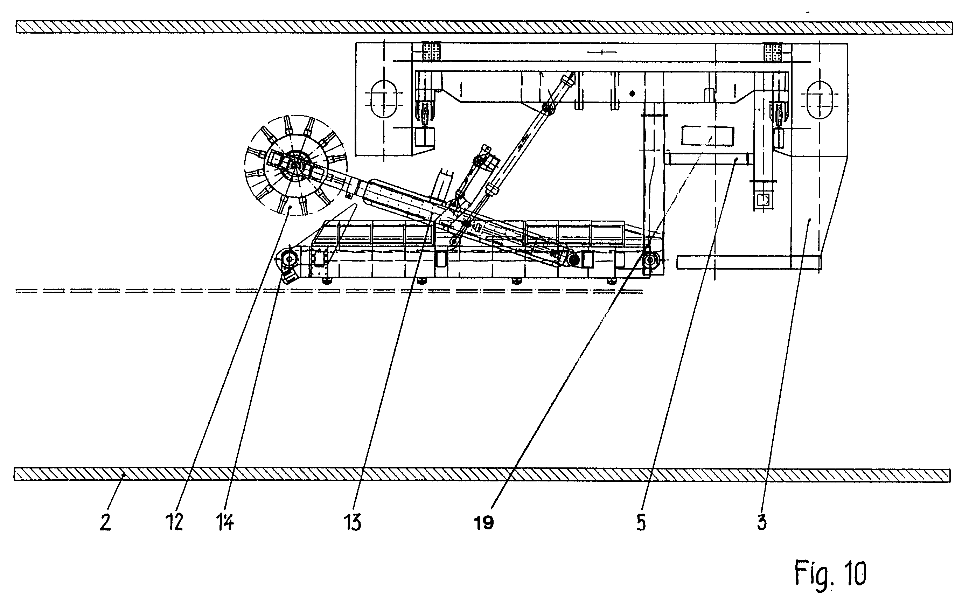

Ist das Material über der vorgesehen Fläche gleichmäßig verteilt, kann der Vorgang wiederholt werden, wobei der vordere Umlenkpunkt noch oben verschoben werden, wie es in Figur 10 dargestellt ist. Auf diese Art und Weise können mehrere Schichten aufgebracht werden.

Beim Vorgang des Absetzens ist die Fräswalze in eine Position über dem Förderband 11 geschoben, in der sie beim Absetzen nicht behindert.

Nach einer Zeit, in der der Rottevorgang eingesetzt hat, besteht die Notwendigkeit, das Material umzusetzen.

Dabei wird zunächst eine obere Schicht von dem Rottematerial umgesetzt und danach eine oder mehrere untere Schichten. Die Aufnahme- und Absetzeinheit 10 wird dabei zunächst in die in Figur 7 dargestellte Position gebracht. Dabei ist die Traverse 13 weit ausgefahren und nach unten geschwenkt.

Durch eine Drehung der Fräswalze 12 wird das Material zerkleinert und danach auf das Förderband 11 geworfen. Durch dieses gelangt es in der bereits dargestellten Art und Weise auf das Brückenförderband 5 und wird von diesem unter der Schleife 7 auf das Längsförderband 4 geworfen.

Das Längsförderband 4 transportiert sodann das Rottematerial zu einer zweiten Anordnung an der anderen Brücke 3. Dort findet ein Absetzvorgang in der gleichen Weise statt, wie er bereits beschrieben wurde. Dabei kann gegebenenfalls in unmittelbarer Nähe des vorderen Umlenkpunktes 14 Wasser in sehr feiner Verteilung, beispielsweise vernebelt, eingebracht werden. Die Menge des Wassereintrages richtet sich nach der Feuchtigkeit des Rottemateriales, die vorher in nicht näher dargestellter Art und Weise gemessen wird.

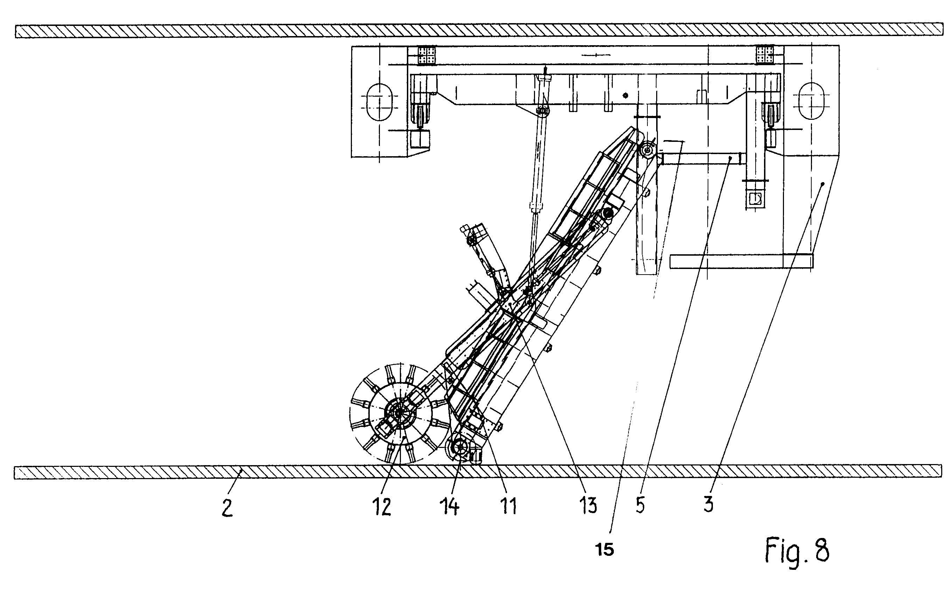

Das Aufnehmen wird danach wiederholt, bis die letzte Schicht von der Kompostiermiete 2 aufgenommen werden kann. Dabei befindet sich die Aufnahme- und Absetzeinheit 10 in der in Figur 8 dargestellten Position.

Beim Aufnehmen fährt die Brücke 3 in Längsrichtung und zwar in die Richtung, in die Aufnahme- und Ansetzeinheit 10 weist.

Ist das Material über die beabsichtigte Fläche vollständig aufgenommen, ist der Umsetzvorgang beendet.

Beim Austragen des Rottemateriales nach Beendigung des Kompostiervorganges wird die Umsetzung von einem Längsförderband 4 auf das andere an der Ausgabeseite 17 aufgehoben. Von dem Ende des an der Ausgabeseite ankommenden Längsförderbandes 4 kann das kompostierte Material entnommen und abtransportiert werden.

Das erfindungsgemäße Verfahren ist somit geeignet, das Material schichtweise aufzunehmen und auch abzulegen, wobei eine Fallhöhe von 1 bis 1,5 m nicht überschritten wird.

Die Absetzvorgänge sind in Brücken-Katzfahrt oder in Katz-Brückenfahrt möglich. Sowohl das Aufnehmen als auch das Absetzen ist damit an beliebigen Punkten möglich.

Die Brückenfahrgeschwindigkeit kann insbesondere beim Aufnehmen des Rottemateriales je nach Materialbeschaffenheit gewählt werden. Auch kann die Wahl der Fahrgeschwindigkeit genutzt werden, um die Höhe des Schichteintrages zu variieren. Dies insbesondere dann, wenn geringere Schichthöhen erzielt werden sollen.

Eine gute und genaue Steuerbarkeit des Umsetzens, eine gute Durchmischung des Rottegutes und damit eine Optimierung des Rottevorganges sind die wesentlichen Vorteile, die mit dem erfindungsgemäßen Verfahren erreicht werden.

### Bezugszeichenliste

- 1: Kompostierhalle
- 2: Kompostiermiete
- 3: Brücke
- 4: Längsförderband
- 5: Brückenförderband
- 6: Schleifenwagen
- 7: Schleife
- 8: Abwurfpunkt im Schleifenwagen
- 9: Katze
- 10: Aufnahme- und Absetzeinheit
- 11: Förderband der Aufnahme- und Absetzeinheit
- 12: Fräswalze
- 13: Traverse
- 14: vorderer Umlenkpunkt des Förderbandes 11
- 15: oberer Umlenkpunkt des Förderbandes 11
- 16: Beschickungsseite
- 17: Ausgabeseite
- 18: Umsetzförderband
- 19: Abstreifer

## Patentansprüche

1. Verfahren zur Umsetzung von Rottematerialien, die in einer Kompostiermiete gelagert sind und bei dem das Rottegut an einer Position, an der der Rottevorgang bereits eine Zeit stattgefunden hat, aufgenommen und an einer anderen Position in einer in ihrer Längserstreckung danebenliegenden Kompostiermiete abgesetzt und durch Schüttung verteilt wird indem der Abwurfpunkt des Rottegutes über die Abwurffläche geführt wird, wo während der darauffolgenden Zeit der Rottevorgang fortgesetzt wird, **dadurch gekennzeichnet**,
daß die Aufnahme des Rottegutes aus einer Kompostiermiete unter gleichzeitiger Zerkleinerung schichtweise von oben nach unten erfolgt, und
daß der Abwurfpunkt höhenvariabel ist, wobei eine maximal vorgegebene Fallhöhe eingehalten wird.

2. Verfahren nach Anspruch 1, **dadurch gekennzeichnet**, daß die maximale Fallhöhe 1 m bis 1,5 m beträgt.

3. Verfahren nach Anspruch 1 oder 2, **dadurch gekennzeichnet**, daß die Verteilung des Rottegutes mehrschichtig erfolgt.

4. Verfahren nach einem der Ansprüche 1 bis 3, **dadurch gekennzeichnet**, daß auf das Rottegut in der Nähe des Abwurfpunktes Wasser in feinverteilter Form aufgebracht wird.

5. Verfahren nach Anspruch 4, **dadurch gekennzeichnet**, daß die Feuchtigkeit im Rottegut gemessen und die Wasserzugabemenge in Abhängigkeit vom Meßergebnis gesteuert wird.

6. Verfahren nach einem der Ansprüche 1 bis 5, **dadurch gekennzeichnet**, daß der Abwurfpunkt in Längs- und Querrichtung der Kompostiermiete bewegbar ist.

7. Vorrichtung zur Umsetzung von Rottegut von einer Kompostiermiete zu einer in Längserstreckung benachbarten Kompostiermiete, mit jeweils einer über jeder Kompostiermiete in Längsrichtung bewegbaren Brücke, an der ein Mittel zur Förderung von Rottegut in Querrichtung der Kompostiermiete angeordnet ist und mit Mitteln zur Förderung des Rottegutes in Längsrichtung der Kompostiermieten in Form von Längsförderbändern, die an ihren Enden über Umsetzförderbänder ringförmig miteinander verbindbar sind, **dadurch gekennzeichnet**,
daß jede Brücke (3) ein reversierbares Brückenförderband (5) aufweist, dem zwischen den Brücken (3) jeweils ein Längsförderband (4) zugeordnet ist, wobei beide Längsförderbänder (4) gegenläufig angetrieben sind,
daß an jeder Brücke (3) eine in Brückenlängsrichtung bewegbare Katze (9) vorgesehen ist, an der eine Aufnahme- und Absetzeinheit (10) mit einem reversierbaren und höhenverstellbaren Förderband (11) und eine Fräswalze (12) angeordnet ist, und
daß die Fräswalze (12) mit Hilfe einer Traverse (13) vor den vorderen Umlenkpunkt (14) des Förderbandes (11) schwenkbar ist.

8. Vorrichtung nach Anspruch 8, **dadurch gekennzeichnet,** daß in jedes der Längsförderbänder (4) ein an der Brücke (3) befestigter Schleifenwagen (6) eingreift, dessen Abwurfpunkt (8) über dem Brückenförderband (5) liegt, wobei der Abwurfpunkt des Brückenförderbandes (5) über dem Längsförderband (4) hinter der Bandschleife (7) liegt.

## Claims

1. Process for shifting rotting materials stored in a composting tank, where the rotting material is taken up at a point where the rotting process has already been in progress for some time and then deposited at another point in a composting tank lying alongside and distributed by deposition, during which operation the deposition point of the rotting material is moved over the deposition area, where the rotting process is to take place during the subsequent period, **characterised in that**
the rotting material is taken up layer by layer from top to bottom in one composting tank and reduced at the same time and
the height of the deposition point is variable and a maximum specified drop is maintained.

2. Process as per Claim 1, **characterised in that** the maximum drop is between 1 m and 1.50 m.

3. Process as per Claim 1 or 2, **characterised in that** the rotting material is distributed in multiple layers.

4. Process as per one of the Claims 1 to 3, **characterised in that** water in finely dispersed form is applied to the rotting material in the vicinity of the deposition point.

5. Process as per Claim 4, **characterised in that** the moisture content is measured in the rotting material and the quantity of water added is controlled as a function of the measurement.

6. Process as per one of the Claims 1 to 5, **characterised in that** the deposition point is movable in the longitudinal and transverse directions of the composting tank.

7. Device for shifting rotting material from one composting tank to another composting tank lying alongside, each tank being equipped with a gantry movable in the longitudinal direction over each composting tank, on which a means for conveying rotting material in the transverse direction of the composting tank is located, as well as means for conveying the rotting material in the longitudinal direction of the composting tanks in the form of longitudinal conveyor belts, the ends of which can be interconnected in loop form via transfer conveyor belts, **characterised in that**
each gantry (3) has a reversible gantry conveyor belt (5), to each of which a longitudinal conveyor belt (4) between the gantries (3) is assigned, the two longitudinal conveyor belts (4) being driven in opposite directions,
each gantry (3) is provided with a crab (9), movable in the longitudinal direction of the gantry, on which a take-up and depositing unit (10) with a reversible conveyor belt (11) of variable height and a grinding roller (12) are located, and
the grinding roller (12) can be swung in front of the front reversing point (14) of the conveyor belt (11) with the aid of a cross-bar (13).

8. Device as per Claim 8, **characterised in that** each longitudinal conveyor belt (4) is engaged by a tripper car (6), mounted on the gantry (3), the deposition point (8) of this car being located above the gantry conveyor belt (5) and the deposition point of the gantry conveyor belt (5) lying above the longitudinal conveyor belt (4) behind the belt loop (7).

## Revendications

1. Procédé pour déplacer des matières en putréfaction, qui sont stockées dans un silo de compostage, et selon lequel le produit en putréfaction est ramassé en un emplacement, au niveau duquel le processus de putréfaction a déjà eu lieu un certain temps, et est déposé en un autre emplacement dans un silo de compostage s étendant à côté suivant sa dimension longitudinale, en étant réparti par déversement grâce au fait que le point de déchargement du produit en putréfaction est guidé au-dessus de la surface de déchargement, où le processus de putréfaction est poursuivi pendant la période qui suit, caractérisé
en ce que le ramassage du produit en putréfaction dans un silo de compostage se fait couche par couche du haut vers le bas, avec déchiquetage simultané, et
en ce que le point de déchargement est variable en hauteur, une hauteur de chute maximale pré-établie étant alors respectée.

2. Procédé selon la revendication 1, caractérisé en ce que la hauteur de chute maximale est de 1 m à 1,5 m.

3. Procédé selon la revendication 1 ou 2, caractérisé en ce que la répartition du produit en putréfaction se fait sur plusieurs couches.

4. Procédé selon l'une des revendications 1 à 3, caractérisé en ce que de l'eau est répandue sous forme finement divisée sur le produit en putréfaction, au voisinage du point de déchargement.

5. Procédé selon la revendication 4, caractérisé en ce que l'humidité dans le produit en putréfaction est mesurée et la quantité ajoutée d'eau est régulée en fonction du résultat de la mesure.

6. Procédé selon l'une des revendications 1 à 5, caractérisé en ce que le point de déchargement est déplaçable dans la direction longitudinale et dans la direction transversale du silo de compostage.

7. Dispositif pour déplacer du produit en putréfaction d'un silo de compostage à un silo de compostage voisin suivant sa dimension longitudinale, comportant un pont respectif déplaçable au-dessus de chaque silo de compostage, dans sa direction longitudinale, et sur lequel est disposé un moyen pour transporter du produit en putréfaction dans la direction transversale du silo de compostage, et comportant des moyens pour transporter le produit en putréfaction dans la direction longitudinale des silos de compostage, se présentant sous la forme de bandes transporteuses longitudinales qui, à leurs extrémités, peuvent être reliées l'une à l'autre en anneau par l'intermédiaire de bandes transporteuses de transfert, caractérisé
en ce que chaque pont (3) comporte une bande transporteuse réversible de pont (5), à laquelle est associée, entre les ponts (3), une bande transporteuse longitudinale respective (4), les deux bandes transporteuses longitudinales (4) étant entraînées dans des sens opposés,
en ce que sur chaque pont (3), est prévu un chariot (9) déplaçable dans la direction longitudinale du pont, chariot sur lequel sont disposés une unité de ramassage et de dépôt (10) munie d'une bande transporteuse (11), réversible et réglable en hauteur, et un rouleau à fraise (12), et
en ce que le rouleau à fraise (12) est monté pivotant, à l'aide d'une traverse (13), en avant du point de changement de direction avant (14) de la bande transporteuse (11).

8. Dispositif selon la revendication 7, caractérisé en ce que, dans chacune des bandes transporteuses longitudinales (4), s'engage un chariot de boucle (6), qui est fixé au pont (3) et dont le point de déchargement (8) est situé au-dessus de la bande transporteuse de pont (5), le point de déchargement de la bande transporteuse de pont (5) étant alors situé au-dessus de la bande transporteuse longitudinale (4), en arrière de la boucle (7) de la bande.
